# EUROPÄISCHE PATENTSCHRIFT

(11) **EP 1 673 199 B1**
(45) Veröffentlichungstag und Bekanntmachung des Hinweises auf die Patenterteilung: **06.05.2009**
(21) Anmeldenummer: 04762745.0
(22) Anmeldetag: 03.09.2004
(51) Int. Cl.: B23Q 11/00

(54) **ABSAUGVORRICHTUNG FÜR EINE WERKZEUGMASCHINE**
SUCTIONING DEVICE FOR A MACHINE TOOL
DISPOSITIF D'ASPIRATION POUR MACHINE-OUTIL

(30) Priorität: 06.10.2003 DE 10346207
(43) Veröffentlichungstag der Anmeldung: 28.06.2006
(73) Patentinhaber: ROBERT BOSCH GMBH, 70442 Stuttgart (DE)
(72) Erfinder: SIMM, Robert, CH-4566 Oekingen (CH); HOUBEN, Jan, Peter, B-2382 Poppel (BE); MOERBEEK, Ruben, Jan, B-4827 PE Breda (BE)
(74) Vertreter: Daub, Thomas
(86) Internationale Anmeldenummer: PCT/DE2004/001958
(87) Internationale Veröffentlichungsnummer: WO 2005/039832

(56) Entgegenhaltungen:
- BE-A- 1 009 324
- DE-A- 3 121 496
- DE-A- 3 501 753
- DE-A- 4 342 484
- GB-A- 2 344 648
- US-A- 5 467 835
- US-A1- 2002 141 836

## Beschreibung

### Stand der Technik

Die Erfindung geht insbesondere aus von einer Vorrichtung mit einer Absaugvorrichtung und einer Werkzeugmaschine nach dem Oberbegriff des Anspruchs 1.

Absaugvorrichtungen zum Absaugen von bei der Bearbeitung von Werkstücken anfallendem abgetragenem Material, insbesondere von bei der Arbeit mit einer Bohr- und/oder Meißelmaschine anfallendem Bohrstaub und Bohrklein, sind weit verbreitet. Dabei soll das abgetragene Material möglichst nahe am Ort seiner Entstehung abgesaugt und aufgefangen werden, um seine Verbreitung in einer Umgebung, insbesondere in Wohnräumen, zu vermeiden.

Aus der US 005 113 951 A ist eine gattungsbildende Absaugvorrichtung für eine Bohr- und/oder Meißelmaschine mit einem Staubbehälter und einem Saugkopf zum Aufbringen auf ein Werkstück bekannt.

Ferner ist aus der BE 1 009 324 A eine Absaugvorrichtung für eine Werkzeugmaschine offenbart, die einen Saugkopf und einen Staubbehälter umfasst, wobei der Saugkopf und der Staubbchälter eine räumliche Einheit bilden. Der Saugkopf und der Staubbehälter sind über eine Lagereinheit verschiebbar an einem Metallbügel gelagert, wobei der Metallbügel an einer Werkzeugaufnahme der Werkzeugmaschine gelagert ist. Zur Erzeugung eines Unterdrucks im Saugkopf ist im Staubbehälter ein Motor integriert, der hinter einem Filter im Staubbehälter angeordnet ist.

### Vorteile der Erfindung

Die Erfindung geht aus von einer Vorrichtung mit einer Absaugvorrichtung und einer Werkzeugmaschine, wobei die Absaugvorrichtung zumindest einen Staubbehälter und zumindest einen Saugkopf zum Aufbringen auf ein Werkstück aufweist, wobei der Staubbehälter in den Saugkopf integriert ist und dieser mit dem Staubbehälter eine räumlich zusammenhängende Einheit bildet sowie mittels einer Lagereinheit entlang einer Arbeitsrichtung verschiebbar an einem Gehäuse der Werkzeugmaschine gelagert ist, und wobei die Absaugvorrichtung eine Absaugeinheit zur Erzeugung eines Unterdrucks im Saugkopf aufweist.

Es wird vorgeschlagen, dass die Lagereinheit einen Tiefenanschlag umfasst und dass die Absaugeinheit in die Werkzeugmaschine integriert ist, wobei die Absaugeinheit einen Antriebsmotor der Werkzeugmaschine nutzt und ein Kühlgebläse der Werkzeugmaschine umfasst, wobei auf einer Welle des Antriebsmotors ein Flügelrad des Kühlgebläses im Betrieb einen Luftstrom durch einen Saugkanal der Absaugvorrichtung über einen im Staubbehälter angeordneten Filter der Absaugvorrichtung und durch den Staubbehälter aus dem Saugkopf in ein Gehäuse der Werkzeugmaschine weiterleitet. Dadurch kann im Vergleich zu einer Werkzeugmaschine mit einer als Fremdaggregat ausgestalteten Absaugeinheit zur Erzeugung eines Unterdrucks, insbesondere in tragbaren Werkzeugmaschinen, ein erhöhter Bedienkomfort erreicht und ein Nachführen eines Verbindungsschlauchs zwischen der Absaugeinheit und der Werkzeugmaschine vermieden werden. Ferner kann das Kühlgebläse vorteilhaft Funktionen der Motorkühlung und der Absaugeinheit zur Erzeugung eines Unterdrucks übernehmen. Des Weiteren kann eine separate Vorrichtung zur Einstellung eines Tiefenanschlags vorteilhaft eingespart werden.

Ferner kann erreicht werden, dass das abgetragene, abgesaugte Material unmittelbar nach seiner Entstehung aufgefangen wird und dass eine Verschmutzung eines großen Teilbereichs der Absaugvorrichtung, insbesondere eines Sauggebläses, durch das abgetragene Material vermieden wird.

Dabei soll der Staubbehälter insbesondere dann als in den Saugkopf integriert gelten, wenn ein Ansaugteil des Saugkopfes mit dem Staubbehälter eine erkennbar räumlich zusammenhängende, besonders vorteilhaft starr verbundene Einheit bildet. Besonders vorteilhaft ist eine erfindungsgemäße Absaugvorrichtung für Bohr- und/oder Meißelmaschinen einsetzbar. Eine Verwendung für Fräsen, Schaber oder andere Werkzeugmaschinen, bei denen abgetragenes Material in einem eng umgrenzten Bereich entsteht, ist jedoch ebenfalls denkbar.

Weist die Absaugvorrichtung eine zumindest den Saugkopf umfassende, lösbar an der Werkzeugmaschine befestigbare Einheit auf, kann die Einheit zur Reinigungszwecken oder in besonders beengten Platzverhältnissen einfach entfernt werden.

In einer weiteren Ausgestaltung der Erfindung wird vorgeschlagen, dass eine den Staubbehälter umfassende Einheit lösbar an der Werkzeugmaschine befestigbar ist. Dadurch kann vorteilhaft ein komfortables Entleeren des Staubbehälters ermöglicht werden.

Besonders vorteilhaft sind Ausgestaltungen der Erfindung, in denen die lösbare Einheit mit einer Rastverbindung befestigbar ist, wodurch ein besonders schnelles und komfortables Befestigen und Lösen der Einheit ermöglicht wird. Prinzipiell sind aber auch andere, insbesondere werkzeugfreie, Befestigungsmethoden denkbar.

Durch die erfindungsgemäße Ausgestaltung kann vorteilhaft eine Relativbewegung zwischen dem Saugkopf und einem Werkstück vermieden oder zumindest wunschgemäß kontrolliert werden, während sich die Werkzeugmaschine relativ zum Werkstück in Arbeitsrichtung bewegt. Insbesondere bei Bohr- und/oder Meißelmaschinen kann der Saugkopf unabhängig von einer momentanen Tiefe eines Bohrlochs in einem Bereich des Bohrlochs an der Oberfläche des Werkstücks gehalten werden. Besonders vorteilhaft sind Ausgestaltungen der Erfindung, in denen ein Federmechanismus nach einer Verschiebung und anschließenden Entlastung des Saugkopfes diesen in eine Ausgangsstellung zurückstellt.

In einer weiteren Ausgestaltung der Erfindung wird vorgeschlagen, dass die Öffnung ein Ende eines sich in Arbeitsrichtung verjüngenden, trichterförmigen Aufnahmebereichs bildet. Dadurch kann eine vorteilhafte Sicht eines Bedieners auf eine Absaugstelle ermöglicht werden, ohne eine Effizienz der Absaugvorrichtung maßgeblich zu beeinträchtigen.

Weist der Saugkopf zudem einen Kanalabschnitt auf, über den ein Luftstrom in Umfangsrichtung des Staubbehälters in diesen einleitbar ist, kann vorteilhaft ein wirbelförmiger Luftstrom im Inneren des Staubbehälters erreicht werden und ein Abtrennen des abgetragenen Materials vom Luftstrom kann durch eine Vermeidung von Turbulenzen und durch einen Zentrifugeneffekt unterstützt sein.

### Zeichnung

Weitere Vorteile ergeben sich aus der folgenden Zeichnungsbeschreibung. In der Zeichnung sind Ausführungsbeispiele der Erfindung dargestellt.

Es zeigen:
- Fig. 1: eine Absaugvorrichtung und eine Werkzeugmaschine mit einem Staubbehälter und einem Saugkopf,
- Fig. 2: einen Ausschnitt der Absaugvorrichtung aus Fig. 1 mit einer abgenommenen, den Staubbehälter umfassenden Einheit,
- Fig. 3: eine weitere abnehmbare Einheit der Absaugvorrichtung aus Fig. 1 und 2 in einer Seitenansicht,
- Fig. 4: die Einheit aus Fig. 3 in Vorderansicht,
- Fig. 5: ein Bauteil der Absaugvorrichtung aus Fig. 1 -4 und eine austauschbare Deckplatte,
- Fig. 6: einen aus Gummi geformten Einsatz einer Absaugvorrichtung aus Fig. 1 - 5,
- Fig. 7: eine alternative Absaugvorrichtung und eine Werkzeugmaschine in einer Seitenansicht,
- Fig. 8: die Absaugvorrichtung und die Werkzeugmaschine aus Fig. 7 in einer Draufsicht,
- Fig. 9: einen Ausschnitt aus einer Führungsstange der Absaugvorrichtung aus Fig. 7 und 8,
- Fig. 10: einen Schnitt entlang einer Linie X - X der Führungsstange aus Fig. 9,
- Fig. 11: ein geöffnetes, drehbar gelagertes Ventil und einen Ausschnitt eines Saugkanals der Absaugvorrichtung aus Fig. 7 - 10,
- Fig. 12: das Ventil aus Fig. 11 in einer geschlossenen Konfiguration,
- Fig. 13: eine schematische Skizze eines Saugkopfes mit einem sich spiralförmig erweiternden Saugkanal der Absaugvorrichtung aus Fig. 7 - 12,
- Fig. 14: einen Schnitt entlang einer Linie XIV - XIV des Saugkopfes aus Fig. 13,
- Fig. 15: einen Schnitt entlang einer Linie XV - XV des Saugkopfes aus Fig. 13 mit einem Filter,
- Fig. 16: einen Tiefenanschlag der Absaugvorrichtung aus Fig. 7 - 15 in einer Seitenansicht,
- Fig. 17: den Tiefenanschlag aus Fig. 16 in einer Draufsicht.
- Fig. 18: eine weitere alternative Absaugvorrichtung mit einem Handgriff in einer Ansicht von schräg vorne,
- Fig. 19: die Absaugvorrichtung aus Fig. 18 in einer Ansicht von schräg hinten,
- Fig. 20: einen Saugkopf der Absaugvorrichtung aus Fig. 18 und 19 in einer Ansicht von unten,
- Fig. 21: den Saugkopf aus Fig. 20 in einem Schnitt entlang einer Linie XXI - XXI,
- Fig. 22: einen Staubbehälter des Saugkopfs aus Fig. 20 und Fig. 21 in einem Schnitt entlang einer Linie XXII - XXII,
- Fig. 23: ein Profil einer Führungsstange und einen Ausschnitt des Handgriffs der Absaugvorrichtung aus Fig. 20 - 23 und

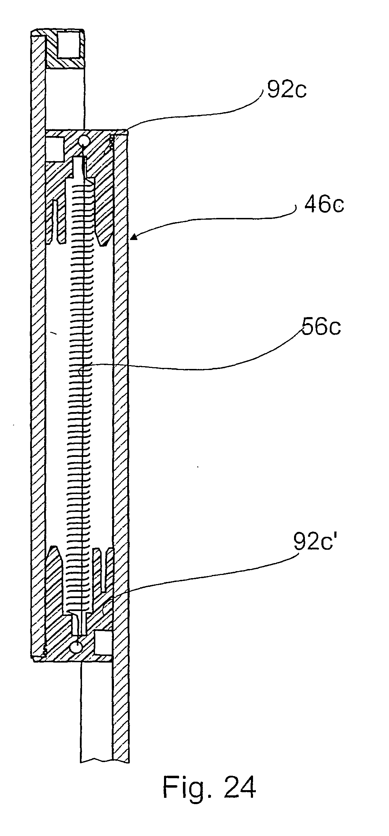

- Fig. 24: die Führungsstange aus Fig. 23.

### Beschreibung der Ausführungsbeispiele

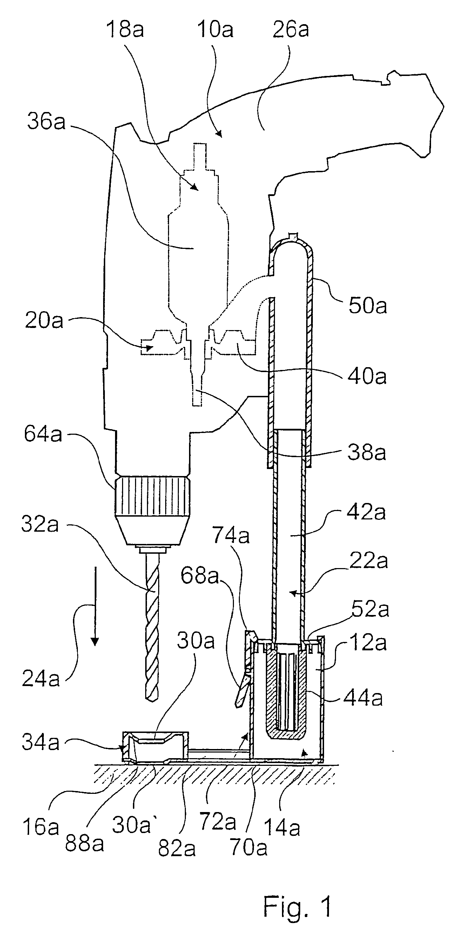

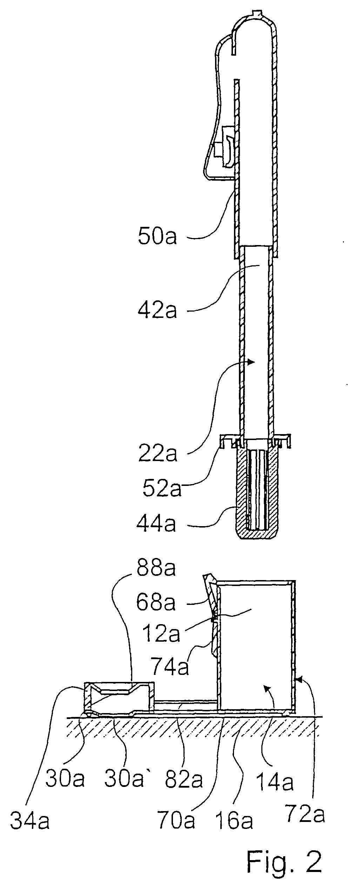

Fig. 1 und 2 zeigen eine Werkzeugmaschine 10a, hier eine Schlagbohrmaschine, mit einer Absaugvorrichtung, die einen Staubbehälter 12a und einen Saugkopf 14a zum Aufbringen auf ein Werkstück 16a aufweist, wobei der Saugkopf 14a ein Ansaugteil 34a und den Staubbehälter 12a umfasst, so dass letzterer in den Saugkopf 14a integriert ist.

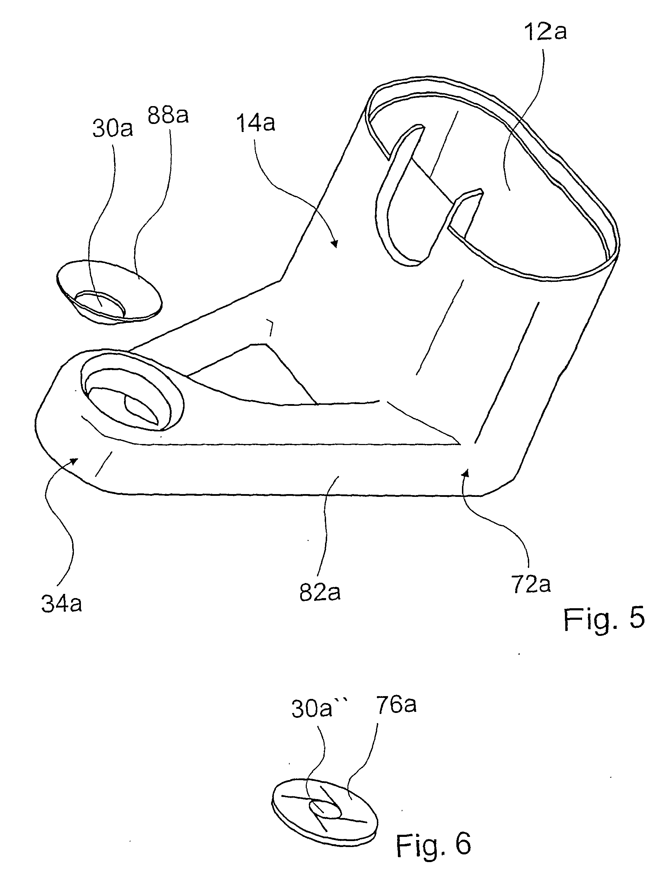

In der Werkzeugmaschine 10a kann im Betrieb eine integrierte Absaugeinheit 18a einen Unterdruck im Saugkopf 14a erzeugen. Die Absaugeinheit 18a nutzt einen Antriebsmotor 36a der Werkzeugmaschine 10a, auf dessen Welle 38a ein Flügelrad 40a einen Luftstrom durch einen Saugkanal 42a über einen im Staubbehälter 12a angeordneten Filter 44a und durch den Staubbehälter 12a aus dem Saugkopf 14a ansaugt und in ihrer Funktion als Kühlgebläse 20a in ein Gehäuse 26a der Werkzeugmaschine 10a weiterleitet. Im Saugkopf 14a wird im Betrieb Luft und mitgeführtes abgetragenes Material durch Öffnungen 30a, 30a' im Ansaugteil 34a angesaugt und durch einen senkrecht zu einer Arbeitsrichtung 24a verlaufenden Kanalabschnitt 82a des Saugkanals 42a in einer Umfangsrichtung des Staubbehälters 12a in diesen eingeleitet, so dass im Staubbehälter 12a ein Wirbel entsteht. Unterstützt durch eine Zentrifugalwirkung können sich Teilchen des abgetragenen Materials vom Luftstrom trennen und am Boden absetzen (Fig. 5). Das Ansaugteil 34a und der Staubbehälter 12a sind auf einer dem Werkstück 16a zugewandten Seite mit einer Plexiglasscheibe 70a versehen, um eine Sichtkontrolle der Menge des im Staubbehälter 12a eingefangenen abgetragenen Materials zu ermöglichen. Ausgestaltungen der Erfindung mit an Seiten und/oder an einer Oberseite des Staubbehälters angeordneten transparenten Teilbereichen zur Sichtkontrolle sind denkbar.

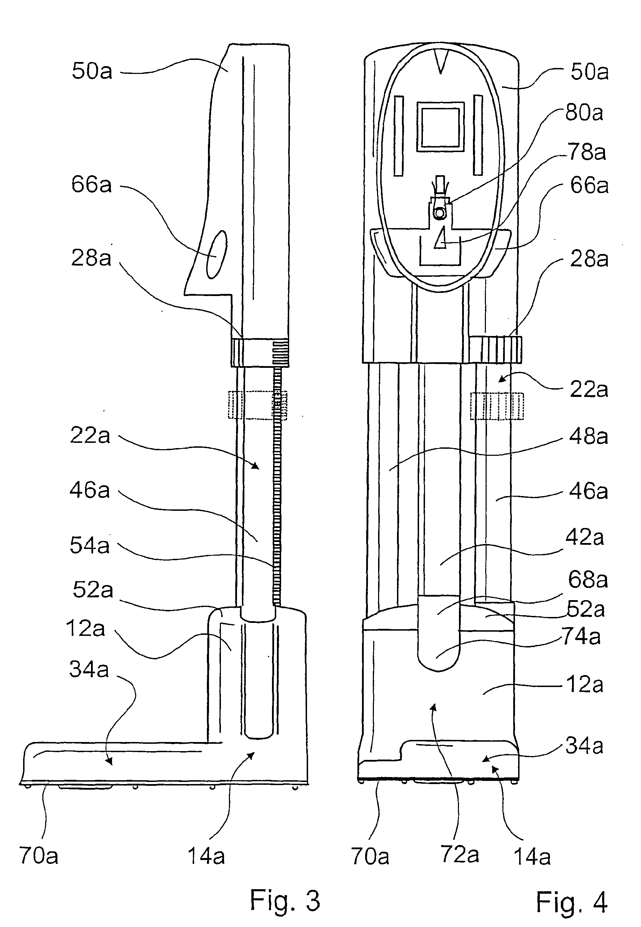

Parallel zum Saugkanal 42a verlaufen zwei eine Lagereinheit bildende Führungsstangen 46a, 48a, die mit einem ersten Ende am Staubbehälter 12a befestigt sind und mit einem zweiten Ende, wie auch ein vorderes Kanalstück des Saugkanals 42a, entlang ihrer Längserstreckung teleskopartig verschiebbar in röhrenförmigen Ausnehmungen in einem Befestigungsteil 50a des Saugkanals 42a gelagert sind (Fig. 4). Dabei führen nicht dargestellte Schraubendruckfedern im Inneren der Führungsstangen 46a, 48a die Ansaugvorrichtung nach einer Entlastung in eine Ausgangskonfiguration zurück. Dadurch ist auch der Saugkopf 14a entlang der Arbeitsrichtung 24a verschiebbar am Gehäuse 26a der Werkzeugmaschine 10a gelagert.

An der Führungsstange 46a ist ein Ring angebracht, der durch Drehen in ein Zahnprofil 54a eingerastet und von diesem gelöst werden kann. Dieser Ring begrenzt im eingerasteten Zustand die Möglichkeit zum Verschieben der Führungsstangen 46a, 48a in einer der Arbeitsrichtung 24a entgegengesetzten Richtung, wobei seine Stirnseite als Tiefenanschlag 28a dient (Fig. 3, Fig. 4). Eine Ausgestaltung der Erfindung mit einer Skala zur Vermessung einer Bohrlochtiefe auf einer Führungsstange ist denkbar.
Das Befestigungsteil 50a, das vordere Kanalstück des Saugkanals 42a, die Führungsstangen 46a, 48a und der Saugkopf 14a mit dem Staubbehälter 12a und dem Ansaugteil 34a bilden eine von der Werkzeugmaschine 10a abnehmbare Einheit 22a (Fig. 2). Diese ist mittels einer seitlich verschiebbaren Rastverbindung 66a lösbar an der Werkzeugmaschine 10a befestigbar. Das Befestigungsteil 50a weist an seiner zur Werkzeugmaschine 10a weisenden Seite und die Werkzeugmaschine 10a weist an ihrer zum Befestigungsteil 50a weisenden Seite jeweils im Profil L-förmige Führungsschienen auf. Zur Befestigung wird die Einheit 22a entgegen der Arbeitsrichtung 24a entlang der Führungsschienen auf die Werkzeugmaschine 10a aufgeschoben, wobei sie in den Richtungen senkrecht zur Arbeitsrichtung 24a über die Führungsschienen geführt ist. An einer Sollposition rastet ein mit einer Zweischenkelfeder 80a belasteter, seitlich verschiebbar gelagerter Keil 78a der Rastverbindung 66a an einem korrespondierenden Rastelement der Werkzeugmaschine 10a ein und fixiert die Einheit 22a. Zum Lösen der Einheit 22a kann der einstückig an einen Schieber angeformte Keil 78a der Rastverbindung 66a aus seiner Raststellung geschoben werden.

Zusätzlich kann von dieser Einheit 22a eine weitere, den Staubbehälter 12a und den Ansaugteil 34a umfassende Einheit 72a zur Entleerung des Staubbehälters 12a und/oder zur Reinigung oder zur Erneuerung des Filters 44a abgenommen werden. Dazu wird eine weitere Rastverbindung 68a genutzt, die einen Hebel 74a mit einem Haken an einem Ende aufweist, der in einem montierten Zustand des Staubbehälters 12a einen mit dem vorderen Kanalteil einstückig ausgeführten und mit dem Filter 44a verbundenen Deckel 52a des Staubbehälter 12a mit diesem verspannt. Durch eine Schwenkbewegung des Hebels 74a der Rastverbindung 68a rastet der Haken aus und die Einheit 72a kann abgenommen werden (Fig. 2).

Das Ansaugteil 34a ist im Wesentlichen dosenförmig ausgebildet und weist in einer Bodenplatte und in einer Deckplatte 88a die Öffnungen 30a, 30a' auf, durch die im Betrieb ein Werkzeug 32a geführt werden kann. Die Öffnungen 30a, 30a' bilden jeweils ein Ende von sich in Arbeitsrichtung 24a trichterförmig verjüngenden Aufnahmebereichen des Ansaugteils 34a, so dass ein Blick eines Bedieners durch die Öffnungen 30a, 30a' auf einen Bereich eines Bohrlochs im Werkstück 16a vorteilhaft ermöglicht wird. Die Bodenplatte wird von der Plexiglasscheibe 70a gebildet, die durch alternative, nicht näher dargestellte Plexiglasscheiben ausgetauscht werden kann, die im Hinblick auf den trichterförmigen Aufnahmebereich bzw. im Hinblick auf die Öffnung 30a' unterschiedliche Abmessungen aufweisen, so dass verschiedene Abmessungen für die Öffnung 30a' wählbar sind. Neben der Bodenplatte ist auch die Deckplatte 88a austauschbar ausgeführt (Fig. 5). Das Ansaugteil 34a umfasst ferner einen elastischen, aus Gummi geformten Einsatz 76a mit tangential zu einer Umfangsrichtung einer Öffnung 30a" verlaufenden Schlitzen, der optional an Stelle der Deckplatte 88a und flexibel in einem Bereich von Bohrergrößen einsetzbar ist (Fig. 6).

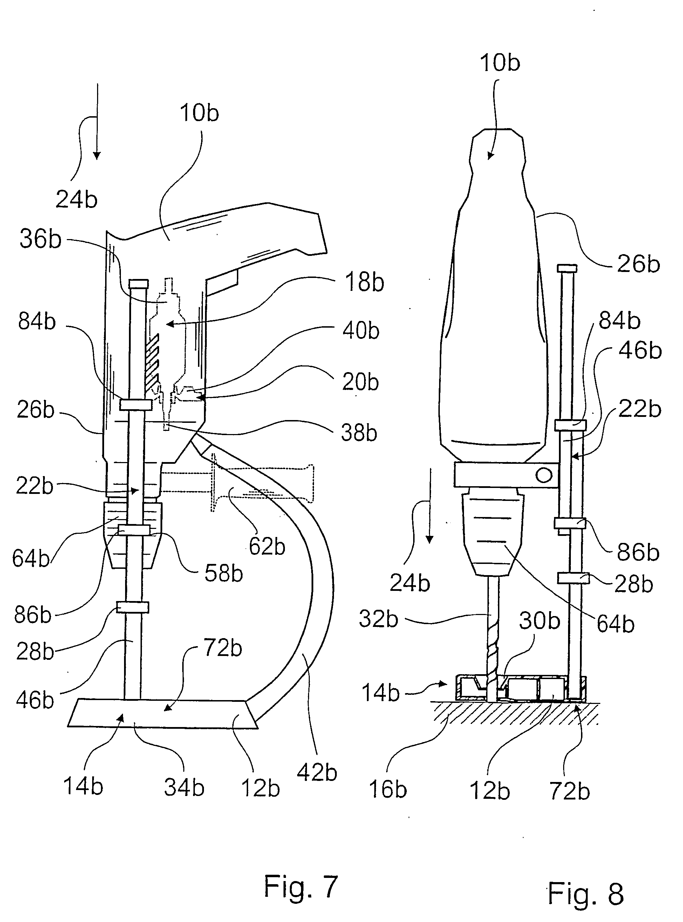

In den Fig. 7 bis 19 sind alternative Ausführungsbeispiele dargestellt. Bei den Ausführungsbeispielen sind in der Beschreibung im Wesentlichen gleiche Bauteile grundsätzlich mit den gleichen Bezugszeichen beziffert, wobei zur Unterscheidung der Ausführungsbeispiele die Buchstaben a - c hinzugefügt sind. Ferner kann bezüglich gleichbleibender Merkmale und Funktionen auf die Beschreibung zum Ausführungsbeispiel in den Fig. 1 bis 6 verwiesen werden. Die nachfolgende Beschreibung beschränkt sich im Wesentlichen auf die Unterschiede zum Ausführungsbeispiel in den Fig. 1 bis 6.

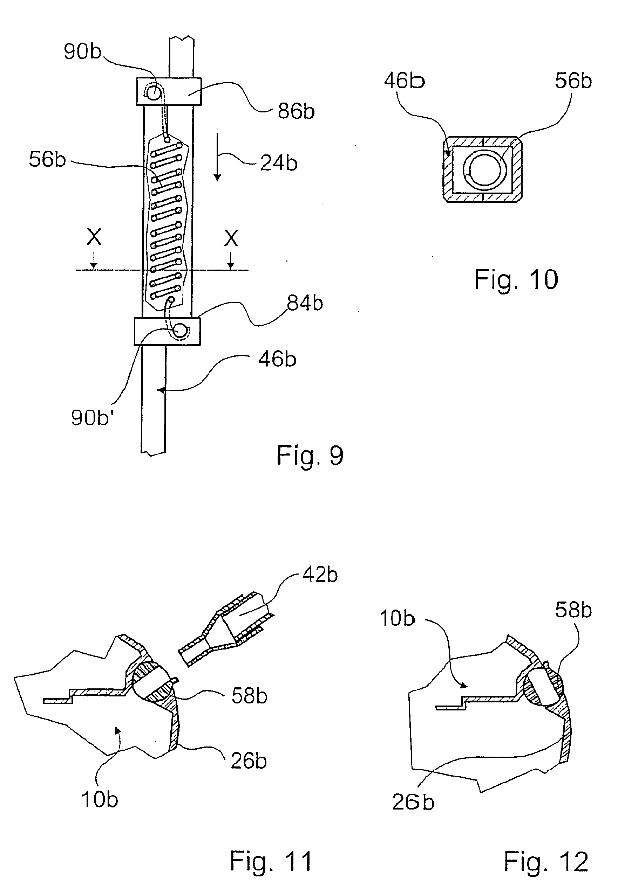

Fig. 7 und 8 zeigen eine Werkzeugmaschine 10b mit einer alternativen Absaugvorrichtung, die einen biegeweichen, als Schlauch ausgestalteten Saugkanal 42b aufweist. Zudem umfasst die Absaugvorrichtung eine als Führungsstange 46b ausgebildete Lagereinheit, die zwei Elemente mit sich in einem Bereich zu einem geschlossenen Profil ergänzende U-Profilen aufweist. In dem Bereich des geschlossenen Profils ist in dessen Innenraum eine eine Rückstellkraft erzeugende Schraubenzugfeder 56b angeordnet. An ihren Enden sind die entgegengesetzt ausgerichteten Elemente der Führungsstange 46b mit Führungselementen 84b, 86b entlang einer Arbeitsrichtung 24b verschiebbar miteinander verbunden, wodurch sich die Führungsstange 46b teleskopartig verschieben lässt. Die Führungselemente 84b, 86b sind mit Schrauben 90b, 90b' an den Elementen der Führungsstange 46b befestigt, wobei die Schrauben 90b, 90b' gleichzeitig als Aufhänger für Zughaken der Schraubenzugfeder 56b genutzt werden (Fig. 9). Werden die Elemente der Führungsstange 46b ineinander geschoben, wird die Schraubenzugfeder 56b gestreckt und erzeugt eine Rückstellkraft.

Die Führungsstange 46b kann über einen Ring oberhalb des Bohrfutters 64b an einer zylinderförmigen Anschlussstelle, an der auch ein Handgriff befestigt werden kann, an einem Gehäuse 26b der Werkzeugmaschine 10b befestigt werden.

Der Saugkanal 42b kann über ein drehbar in dem Gehäuse 26b der Werkzeugmaschine 10b gelagertes Ventil 58b an eine in die Werkzeugmaschine 10b integrierte Absaugeinheit 18b zur Erzeugung eines Unterdrucks angeschlossen werden (Fig. 11 und 12).

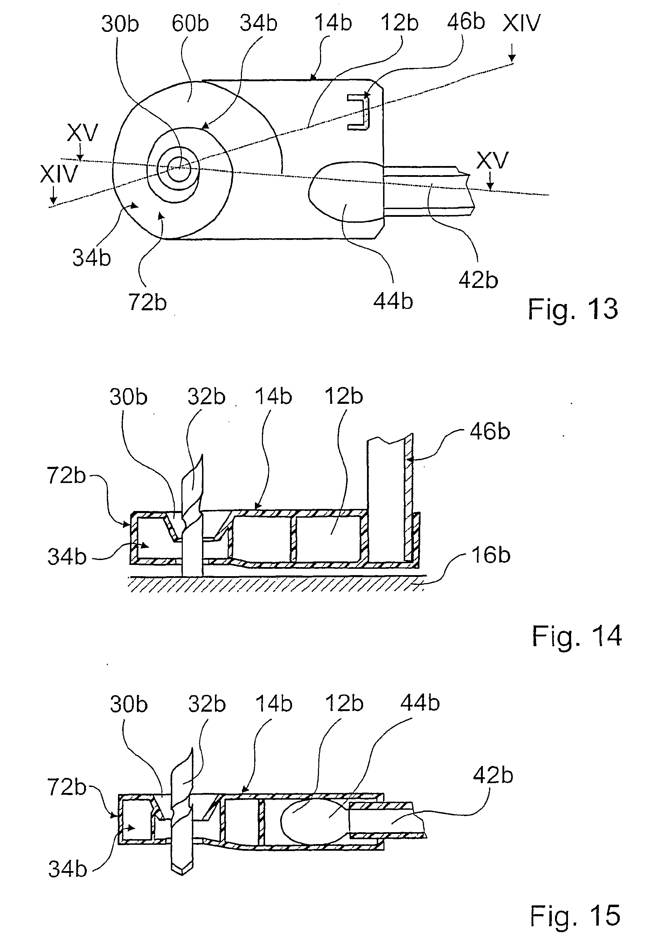

Der Saugkopf 14b weist zur Erzeugung eines verstärkten Saugeffekts einen sich von einer Öffnung 30b aus spiralförmig erweiternden Absaugkanal 60b auf, der in einem Staubbehälter 12b mündet (Fig. 13). Eine zum Werkstück 16b hin gewandte Seite des Saugkopfs 14b weist im Bereich der Öffnung 30b eine Ausnehmung auf, durch die im Betrieb ein Luftstrom mit hoher Geschwindigkeit zwischen dem Werkstück 16b, insbesondere einer Wand, und dem Saugkopf 14b angesaugt wird, wodurch abgetragenes Material unmittelbar am Werkstück 16b abgesaugt wird (Fig. 14 und 15).

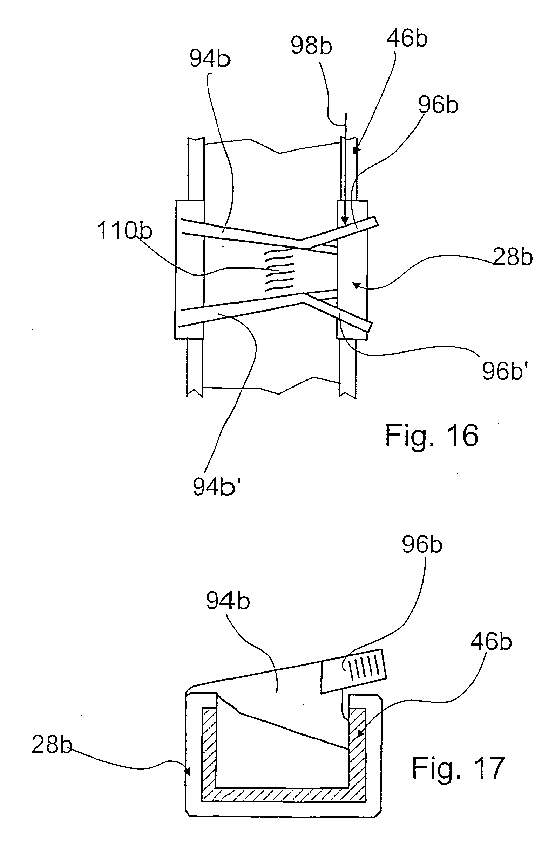

Fig. 16 und 17 stellen einen Tiefenanschlag 28b der Absaugvorrichtung, dessen C-förmig ausgebildeter Körper als Klammer um das U-Profil ein erstes Element der Führungsstange 46b greift und auf dessen Oberseite das zweite Element der Führungsstange 46b anschlagen kann. An einer offenen Seite des Tiefenanschlags 28b greifen zwei Schenkel 94b, 94b' des Tiefenanschlags 28b in das U-Profil des Elements der Führungsstange 46b ein und sind dort von einer Spiraldruckfeder 110b in entgegengesetzten Richtungen in verkanteten Positionen gehalten, wodurch ein Verschieben des Tiefenanschlags 28b ohne ein Lösen der Verkantung eines der Schenkel 94b, 94b' verhindert wird. Die Verkantung der Schenkel 94b, 94b' kann durch einen Druck 98b auf einen der an den Schenkeln 94b, 94b' angebrachten Hebel 96b, 96b' gelöst werden, wobei sich durch den Druck 98b der Tiefenanschlag 28b in Richtung des Drucks 98b verschieben lässt.

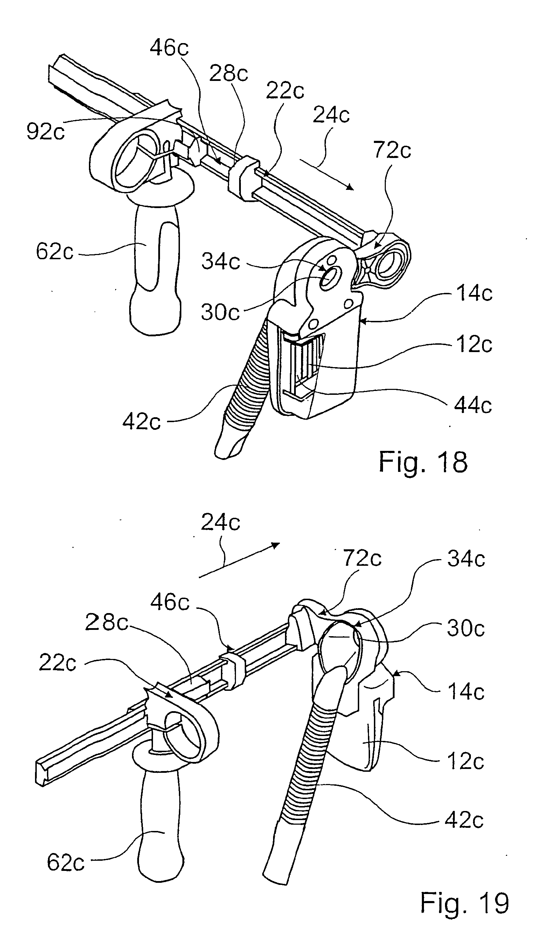

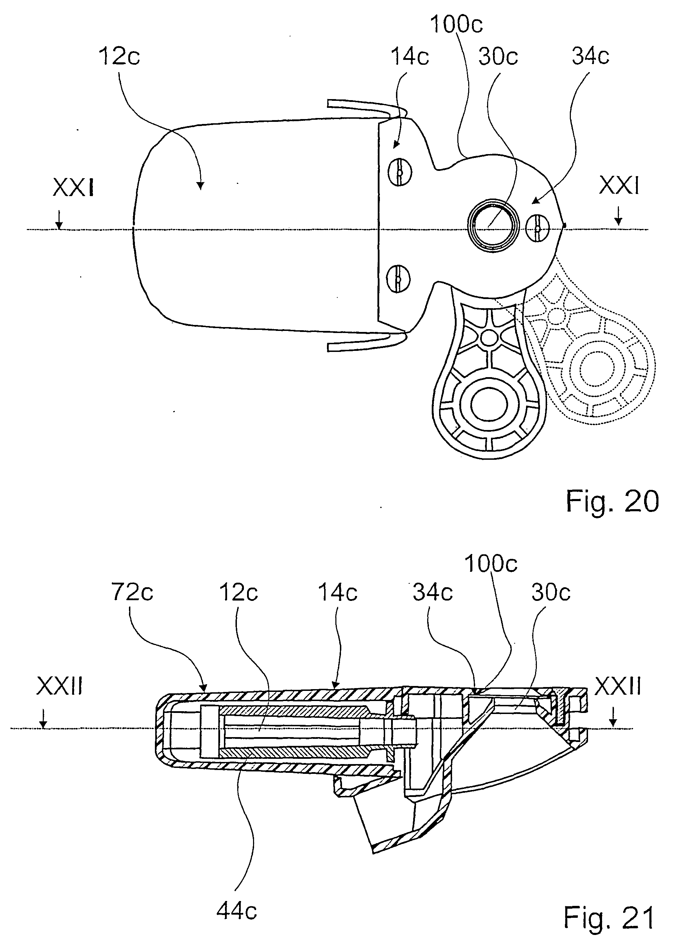

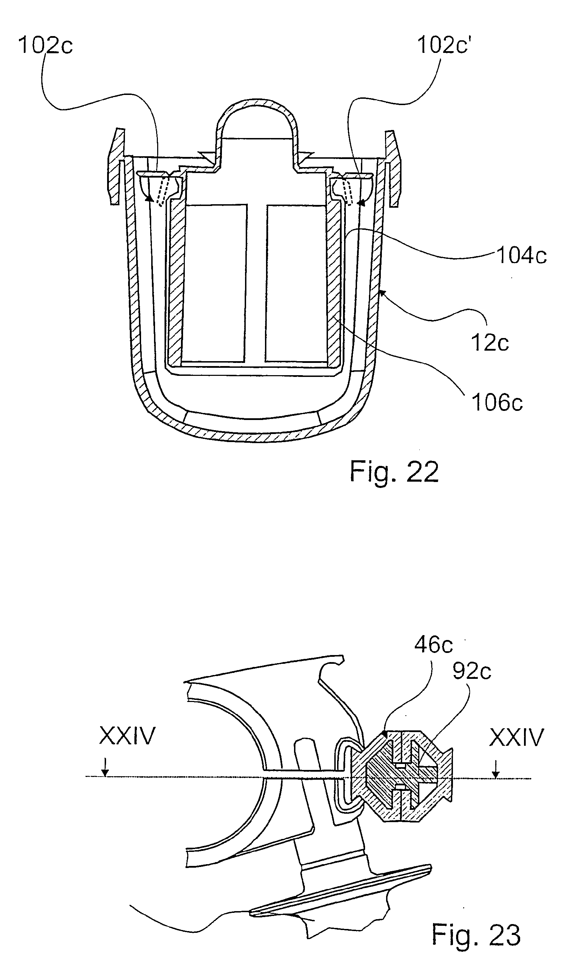

Eine weitere alternative Absaugvorrichtung weist einen Handgriff 62c auf, der an einem Ring zur bezüglich eines Winkels um die Arbeitsrichtung 24c variablen Befestigung der Absaugvorrichtung an einer nicht dargestellten Werkzeugmaschine angebracht ist, an dem auch eine als Führungsstange 46c ausgebildete Lagereinheit befestigt ist (Fig. 18 und 19). Ferner weist der Ring eine hier nicht dargestellte Aufnahme für einen konventionellen, als separate Stange ausgebildeten Tiefenanschlag auf. Ein Staubbehälter 12c ist drehbar an einem Befestigungsbereich 100c des Saugkopfs 14c gelagert, wodurch der Staubbehälter 12c im montierten Zustand der Absaugvorrichtung um eine Bohrachse relativ zum Handgriff 62c drehbar ist und wodurch eine Anpassung der Absaugvorrichtung in engräumigen Bohrsituationen ermöglicht wird(Fig. 20). Ferner ist der Staubbehälter 12c lösbar von dem Befestigungsbereich 100c und weist einstückig mit einem Rumpf des Staubbehälters 12c ausgeführte Klappen 102c, 102c' auf, die bei einem Lösen des Staubbehälters 12c von dem Befestigungsbereich 100c den Staubbehälter 12c selbsttätig verschließen (Fig. 22). In einem Innenraum des Staubbehälters 12c ist ein Staubsack 104c angebracht und wird von einer Stützvorrichtung 106c offen gehalten.

Die Führungsstange 46c umfasst zwei Elemente mit im Wesentlichen C-förmigen Profilen (Fig. 23), die zusammen einen Innenraum bilden, in dem eine Schraubenzugfeder 56c angeordnet ist. An ihren Enden sind in die Elemente der Führungsstange 46c Führungselemente 92c, 92c' eingepresst, an denen die Schraubenzugfeder 56c angreift und an denen zudem abstandhaltende Dämpfungsbereiche angebracht sind, die ein auf Block-Laufen der Schraubenzugfeder 56c verhindern.

### Bezugszeichen

- 10: Werkzeugmaschine
- 12: Staubbehälter
- 14: Saugkopf
- 16: Werkstück
- 18: Vorrichtung
- 20: Kühlgebläse
- 22: Einheit
- 24: Arbeitsrichtung
- 26: Gehäuse
- 28: Tiefenanschlag
- 30: Öffnung
- 32: Werkzeug
- 34: Ansaugteil
- 36: Antriebsmotor
- 38: Welle
- 40: Flügelrad
- 42: Saugkanal
- 44: Filter
- 46: Führungsstange
- 48: Führungsstange
- 50: Befestigungsteil
- 52: Deckel
- 54: Zahnprofil
- 56: Schraubenzugfeder
- 58: Ventil

- 60: Absaugkanal
- 62: Handgriff
- 64: Bohrfutter
- 66: Rastverbindung
- 68: Rastverbindung
- 70: Plexiglasscheibe
- 72: Einheit
- 74: Hebel
- 76: Einsatz
- 78: Keil
- 80: Zweischenkelfeder
- 82: Kanalabschnitt
- 84: Führungselement
- 86: Führungselement
- 88: Deckplatte
- 90: Schraube
- 92: Führungselement
- 94: Schenkel
- 96: Hebel
- 98: Druck
- 100: Befestigungsbereich
- 102: Klappe
- 104: Staubsack
- 106: Stützvorrichtung

## Patentansprüche

1. Vorrichtung mit einer Absaugvorrichtung und einer Werkzeugmaschine (10a, 10b), wobei die Absaugvorrichtung zumindest einen Staubbehälter (12a - 12c) und zumindest einen Saugkopf (14a - 14c) zum Aufbringen auf ein Werkstück (16a, 16b) aufweist, wobei der Staubbehälter (12a - 12c) in den Saugkopf (14a - 14c) integriert ist und dieser mit dem Staubbehälter (12a - 12c) eine räumlich zusammenhängende Einheit (72a - 72b) bildet sowie mittels einer Lagereinheit (46a - 46c, 48a) entlang einer Arbeitsrichtung (24a - 24c) verschiebbar an einem Gehäuse (26a, 26b) der Werkzeugmaschine (10a, 10b) gelagert ist, und wobei die Absaugvorrichtung eine Absaugeinheit (18a, 18b) zur Erzeugung eines Unterdrucks im Saugkopf (14a - 14c) aufweist, **dadurch gekennzeichnet, dass** die Lagereinheit (46a - 46c, 48a) einen Tiefenanschlag umfasst und dass die Absaugeinheit (18a, 18b) in die Werkzeugmaschine (10a, 10b) integriert ist, wobei die Absaugeinheit (18a, 18b) einen Antriebsmotor (36a, 36b) der Werkzeugmaschine (10a, 10b) nutzt und ein Kühlgebläse (20a, 20b) der Werkzeugmaschine (10a, 10b) umfasst, wobei auf einer Welle (38a, 38b) des Antriebsmotors (36a, 36b) ein Flügelrad (40a, 40b) des Kühlgebläses (20a, 20b) im Betrieb einen Luftstrom durch einen Saugkanal (42a - 42c) der Absaugvorrichtung über einen im Staubbehälter (12a - 12c) angeordneten Filter (44a - 44c) der Absaugvorrichtung und durch den Staubbehälter (12a - 12c) aus dem Saugkopf (14a - 14c) in ein Gehäuse (26a, 26b) der Werkzeugmaschine (10a,10b) weiterleitet.

2. Vorrichtung nach Anspruch 1, **gekennzeichnet durch** eine zumindest den Saugkopf (14a - 14c) umfassende, lösbar an der Werkzeugmaschine (10a, 10b) befestigbare Einheit (22a - 22c) .

3. Vorrichtung nach einem der vorhergehenden Ansprüche, **gekennzeichnet durch** eine zumindest den Staubbehälter (12a - 12c) umfassende, lösbar an der Werkzeugmaschine (10a, 10b) befestigbare Einheit (22a - 22c).

4. Vorrichtung nach Anspruch 2 oder 3, **dadurch gekennzeichnet, dass** die Einheit (22a - 22c, 72a) mit einer Rastverbindung (66a, 68a) an der Werkzeugmaschine (10a, 10b) befestigbar ist.

5. Vorrichtung nach einem der vorhergehenden Ansprüche, **dadurch gekennzeichnet, dass** der Saugkopf (14a - 14c) zumindest eine Öffnung (30a - 30c) aufweist, durch die in zumindest einem Betriebszustand ein Werkzeug (32a, 32b) führbar ist.

6. Vorrichtung nach Anspruch 5, **dadurch gekennzeichnet, dass** verschiedene Abmessungen für die Öffnung (30a' - 30c') wählbar sind.

7. Vorrichtung nach Anspruch 5 oder 6, **dadurch gekennzeichnet, dass** die Öffnung (30a - 30c) ein Ende eines sich in Arbeitsrichtung (24a - 24c) verjüngenden, trichterförmigen Aufnahmebereichs bildet.

8. Vorrichtung nach einem der vorhergehenden Ansprüche, **dadurch gekennzeichnet, dass** über einen Kanalabschnitt (82a) des Saugkopfs (14a) ein Luftstrom in einer Umfangsrichtung des Staubbehälters (12a) in den Staubbehälter (12a) einleitbar ist.

9. Vorrichtung nach einem der Ansprüche 1 bis 8, **dadurch gekennzeichnet, dass** die Werkzeugmaschine (10a, 10b) als Bohr- und/oder Meißelmaschine ausgebildet ist.

## Claims

1. Device with a suctioning device and a machine tool (10a, 10b), wherein the suctioning device has at least one dust container (12a - 12c) and at least one suction head (14a - 14c) for attaching to a workpiece (16a, 16b), wherein the dust container (12a - 12c) is integrated in the suction head (14a -14c) and the latter, together with the dust. container (12a - 12c), forms a spatially linked unit (72a -- 72b) and, by means of a bearing unit (46a - 46c, 48a), is mounted displaceably along a working direction (24a - 24c) on a housing (26a, 26b) of the machine tool (10a, 10b), and wherein the suctioning device has a suctioning unit (18a, 18b) for generating a negative pressure in the suction head (14a - 14c), **characterized in that** the bearing unit (46a - 46c, 48a) comprises a bit stop, and **in that** the suctioning unit (18a, 18b) is integrated in the machine tool (10a, 10b), with the suctioning unit (18a, 18b) using a driving motor (36a, 36b) of the machine tool (10a, 10b) and comprising a cooling fan (20a, 20b) of the machine tool (10a, 10b), with an impeller (40a, 40b) of the cooling fan (20a, 20b) on a shaft (38a, 38b) of the driving motor (36a, 36b) transmitting, during operation, an air stream through a suction channel (42a - 42c) of the suctioning device via a filler (44a - 44c) of the suctioning device, which filter is arranged in the dust container (12a - 12c), through the dust container (12a - 12c) from the suction head (14a - 14c) into a housing (26a, 26b) of the machine tool (10a, 10b).

2. Device according Lo Claim 1, **characterized by** a unit (22a - 22c) which comprises at least the suction head (14a - 14c) and can be fastened releasably to the machine tool (10a, 10b).

3. Device according to one of the preceding claims,
**characterized by** a unit (22a - 22c) which comprises at least the dust container (12a - 12c) and can be fastened releasably to the machine tool (10a, 10b) .

4. Device according to Claim 2 or 3, **characterized in that** the unit (22a - 22c, 72a) can be fastened to the machine tool (10a, 10b) by means of a latching connection (66a, 68a).

5. Device according to one of the preceding claims,
**characterized in that** the suction head (14a - 14c) has at least one opening (30a - 30c) through which a tool (32a, 32b) can be guided in at least one operating state.

6. Device according to Claim 5, **characterized in that** different dimensions can be selected for the opening (30a' - 30c') .

7. Device according to Claim 5 or 6, **characterized in that** the opening (30a - 30c) forms one end of a funnel-shaped receiving region Lapering in the working directing (24a - 24c).

8. Device according to one of the preceding claims, **characterized in that** an air stream can be introduced into the dust container (12a) in a circumferential direction of the dust container (12a) via a channel section (82a) of the suction head (14a).

9. Device according to one of Claims 1 to 8,
**characterized in that** the machine tool (10a, 10b) is designed as a drilling and/or chiselling machine.

## Revendications

1. Dispositif comprenant un dispositif d'aspiration et une machine-outil (10a, 10b), le dispositif d'aspiration présentant au moins un collecteur de poussière (12a - 12c) et au moins une tête d'aspiration (14a - 14c) devant être appliquée sur une pièce (16a, 16b), le collecteur de poussière (12a - 12c) étant intégré dans la a tête d'aspiration (14a - 14c) et celle-ci formant avec le collecteur de poussière (12a - 12c) une unité spatialement contiguë (72a - 72b), et étant montée au moyen d'une unité de palier (46a - 46c, 48a) le long d'une direction de travail (24a - 24c) de manière déplaçable sur un boîtier (26a, 26b) de la machine-outil (10a, 10b), et le dispositif d'aspiration présentant une unité d'aspiration (18a, 18b) pour produire une dépression dans la tête d'aspiration (14a - 14c), **caractérisé en ce que** l'unité de palier (46a - 46c, 48a) comprend une butée de profondeur et **en ce que** l'unité d'aspiration (18a, 18b) est intégrée dans la machine-outil (10a, 10b), l'unité d'aspiration (18a, 18b) utilisant un moteur d'entraînement (36a, 36b) de la machine-outil (10a, 10b) et comprenant une soufflante de refroidissement (20a, 20b) de la machine-outil (10a, 10b), une roue à aubes (40a, 40b) de la soufflante de refroidissement (20a, 20b) sur un arbre (38a, 38b) du moteur d'entrainement (36a, 36b) transférant, pendant le fonctionnement, un courant d'air à travers un canal d'aspiration (42a - 42c) du dispositif d'aspiration par le biais d'un filtre (44a 44c) disposé dans le collecteur de poussière (12a - 12c) du dispositif d'aspiration et à travers le collecteur de poussière (12a - 12c) depuis la tête d'aspiration (14a- 14c) dans un boîtier (26a, 26b) de la machine-outil (10a, 10b) .

2. Dispositif selon la revendication 1, **caractérisé par** une unité (22a - 22c) comprenant au moins la tête d'aspiration (14a - 14c), pouvant être fixée de manière détachable à la machine-outil (10a, 10b).

3. Dispositif selon l'une quelconque des revendications précédentes, **caractérisé par** une unité (22a - 22c) comprenant au moins le collecteur de poussière (12a - 12c), pouvant être fixée de manière amovible à la machine-outil (10a, 10b).

4. Dispositif selon la revendication 2 ou 3, **caractérisé en ce que** l'unité (22a - 22c, 72a) peut être fixée à la machine-outil (10a, 10b) par une connexion par encliquetage (66a, 68a) .

5. Dispositif selon l'une quelconque des revendications **caractérise en ce que** la tête d'aspiration (14a - 14c) présente au moins une ouverture (30a - 30c) à travers laquelle un outil (32a, 32b) peut être guidé dans au moins un état de fonctionnement.

6. Dispositif selon la revendication 5, **caractérisé en ce que** différentes dimensions pour l'ouverture (30a' - 30c') peuvent être sélectionnées.

7. Dispositif selon la revendication 5 ou 6, **caractérisé en ce que** l'ouverture (30a - 30c) forme une extrémité d'une région de réception en forme d'entonnoir se rétrécissant dans la direction de travail (24a - 24c).

8. Dispositif selon l'une quelconque des revendications précédentes, **caractérisé en ce qu'**un courant d'air peut être introduit dans le collecteur de poussière (12a) dans une direction périphérique du collecteur de poussière (12a), par le biais d'une portion de canal (82a) de la tête d'aspiration (14a).

9. Dispositif selon l'une quelconque des revendications 1 à 8, **caractérisé en ce que** la machine-outil (10a, 10b) est réalisée sous forme de perceuse et/ou de trépan.
